# EUROPEAN PATENT APPLICATION

(11) **EP 3 203 414 A2**
(43) Date of publication of application: **09.08.2017**
(21) Application number: 16199058.5
(22) Date of filing: 16.11.2016
(51) Int. Cl.: G06K 9/00

(54) **INTELLIGENT SYSTEM FOR USE IN A PREDETERMINED SPACE AND CORRESPONDING METHOD**

(30) Priority: 11.12.2015 US 201562266005 P
(71) Applicant: Squarex Inc., New Taipei City 220 (TW)
(72) Inventor: HSIEH, Jung-Ya, 220 New Taipei City (TW); CHEN, Kuei-Yuan, 220 New Taipei City (TW); LIN, Ming-Te, 220 New Taipei City (TW)
(74) Representative: Viering, Jentschura & Partner mbB Patent- und Rechtsanwälte

(57) **Abstract**

Disclosed are an intelligence system (1) and a method for providing a message and/or service. This intelligence system (1) is configured and used in a predetermined space (A1), and comprises an event recognition module (12), an event analysis module (13) and a service-information providing module (14). The event recognition module (12) comprises an image capturing unit (121) and an image recognition unit (122). The image capturing unit (121) captures an image within the predetermined space (A1), and the image recognition unit (122) recognizes a key characteristic of the image. The event analysis module (13) compares the key characteristic with a key characteristic-behavior chart, a key characteristic-relative information chart, a key characteristic-situation chart, a key characteristic-emotion chart or a key characteristic-style chart, and then generates a comparison result. The service-information providing module (14) provides at least a message or a service according to the comparison result.

## Description

### BACKGROUND OF THE INVENTION

### 1. Field of the Invention

The instant disclosure relates to an intelligence system; in particular, to an intelligence system configured and used in a predetermined space.

### 2. Description of Related Art

In the field of the interior design, every accurate model of a fully designed living space including furniture and home appliances is a masterpiece of the host or a designer. Nowadays, the modern home appliances are no longer bulky. However, there is no uniform size for the home appliances manufactured by different companies. Designers choose pieces often according to their experience or the host's preference. In addition, different home appliances use different communication protocols, and there is no single platform for a user to control all the home appliances. Thus, an intelligence system that has system units having the same size which can communicate with different home appliances is needed.

### SUMMARY OF THE INVENTION

The instant disclosure provides an intelligence system. This intelligence system is configured and used in a predetermined space, and comprises an event recognition module, an event analysis module and a service-information providing module. The event recognition module comprises an image capturing unit and an image recognition unit. The image capturing unit captures an image within the predetermined space, and the image recognition unit recognizes a key characteristic of the image. The event analysis module compares the key characteristic with a key characteristic-behavior chart, a key characteristic-relative information chart, a key characteristic-situation chart, a key characteristic-emotion chart or a key characteristic-style chart, and then generates a comparison result. The service-information providing module provides at least a message or a service according to the comparison result.

The instant disclosure further provides an intelligence system. This intelligence system is configured and used in a predetermined space, and comprises a control module. The control module comprises a smart image module and a smart speaker module. The smart image module comprises a plurality of smart image units to show images, and the smart speaker module comprises a plurality of smart speaker units to transmit an audio signal. In addition, the smart image module is panel-shaped.

The instant disclosure further provides a method for providing a message and/or service adapted to an intelligence system, wherein the intelligence system is configured and used in a predetermined space. The method comprises: capturing an image within the predetermined space by an image capturing unit; determining whether a user enters the predetermined space; predicting a user behavior happening in the predetermined space; and predicting a message or a service according to a prediction result.

The instant disclosure further provides a method for providing a message and/or service adapted to an intelligence system, wherein the intelligence system is configured and used in a predetermined space. The method comprises: determining whether an event is triggered; capturing an image within the predetermined space, and recognizing a key characteristic of the image; and providing a message or a service according to the key characteristic.

To sum up, the intelligence system provided by the instant disclosure is composed of a plurality of system units, which can reduce the cost and the complexity of assembly. In addition, the appearance of the intelligence system provided by the instant disclosure is a large plane, and thus it can easily fit a room and provide a diversity of room designs for a user. Moreover, the intelligence system provided by the instant disclosure can recognize a key characteristic of the user to predict the user behavior, and thus can providing a useful message and a cozy environment for the user.

For further understanding of the instant disclosure, reference is made to the following detailed description illustrating the embodiments of the instant disclosure. The description is only for illustrating the instant disclosure, not for limiting the scope of the claim.

### BRIEF DESCRIPTION OF THE DRAWINGS

Embodiments are illustrated by way of example and not by way of limitation in the figures of the accompanying drawings, in which like references indicate similar elements and in which:
Fig. 1 shows a schematic diagram of an intelligence system of one embodiment of the instant disclosure.
Fig. 2A shows a schematic diagram of a key characteristic-behavior chart of one embodiment of the instant disclosure.
Fig. 2B shows a schematic diagram of a key characteristic-relative information chart of one embodiment of the instant disclosure.
Fig. 2C shows a schematic diagram of a key characteristic-situation chart of one embodiment of the instant disclosure.
Fig. 2D shows a schematic diagram of a key characteristic-emotion chart of one embodiment of the instant disclosure.
Fig. 2E shows a schematic diagram of a key characteristic-style chart of one embodiment of the instant disclosure.
Fig. 3 is a schematic diagram showing that an intelligence system of one embodiment of the instant disclosure is configured and used in a predetermined space.
Fig. 4 shows a schematic diagram of an intelligence system of another embodiment of the instant disclosure.
Fig. 5 is a schematic diagram showing a system unit of the intelligence system shown in Fig. 3.
Fig. 6 is a schematic diagram showing that the system units shown in Fig. 3 form a large plane.
Fig. 7 shows a schematic diagram of an intelligence system of still another embodiment of the instant disclosure.
Fig. 8 shows a flow chart of a method for providing a message and/or service adapted to an intelligence system of one embodiment of the instant disclosure.
Fig. 9 shows another flow chart of a method for providing a message and/or service adapted to an intelligence system of one embodiment of the instant disclosure.

### DETAILED DESCRIPTION OF PREFERRED EMBODIMENTS

The aforementioned illustrations and following detailed descriptions are exemplary for the purpose of further explaining the scope of the instant disclosure. Other objectives and advantages related to the instant disclosure will be illustrated in the subsequent descriptions and appended drawings.

It will be understood that, although the terms first, second, third, and the like, may be used herein to describe various elements, but these elements should not be limited by these terms. These terms are only to distinguish one element from another. For example, a first element, region or section discussed below could be termed a second element, region or section without departing from the teachings of the instant disclosure. As used herein, the term "and/or" includes any and all combinations of one or more of the associated listed items.

There is at least one embodiment provided in the following description to illustrate but not to restrict the intelligence system provided by the instant disclosure.

### [One embodiment of the intelligence system]

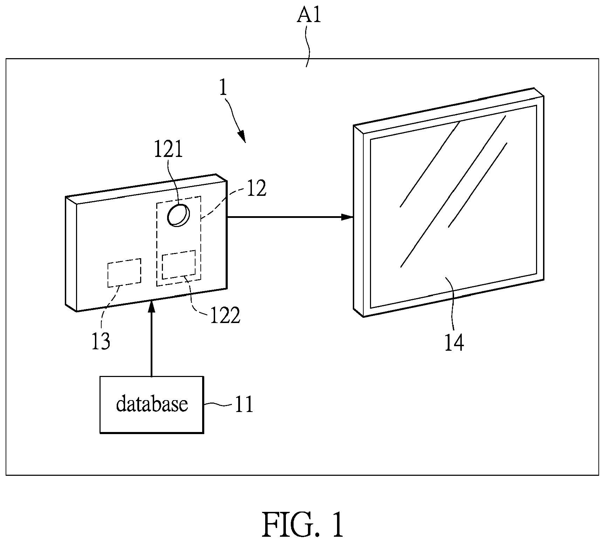

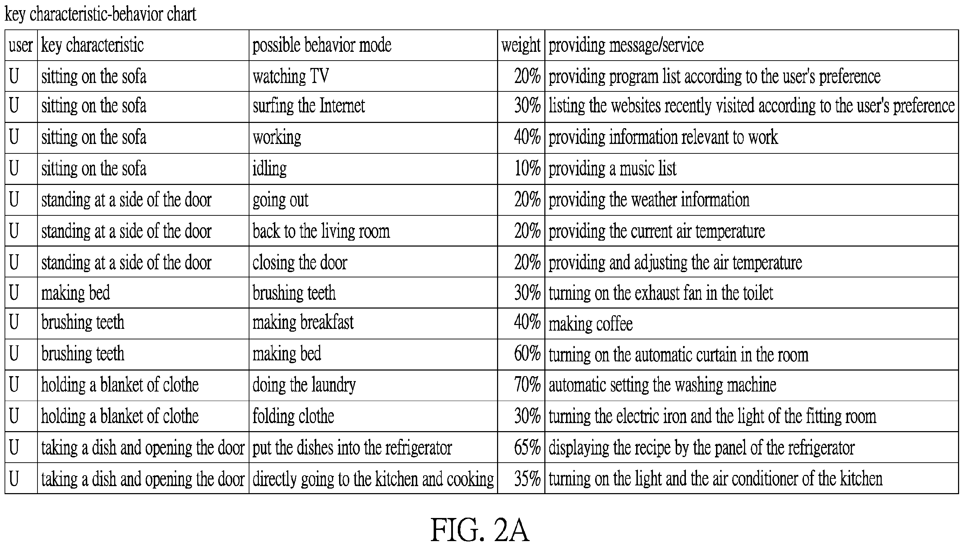

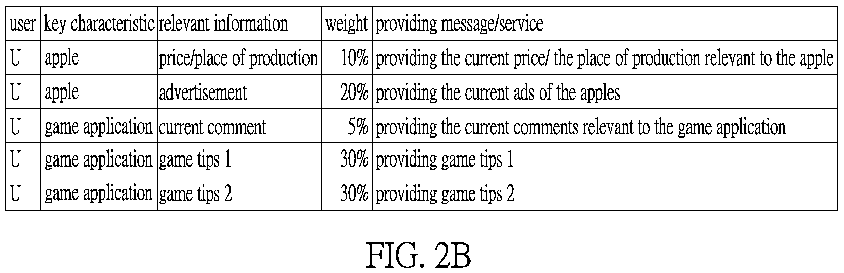

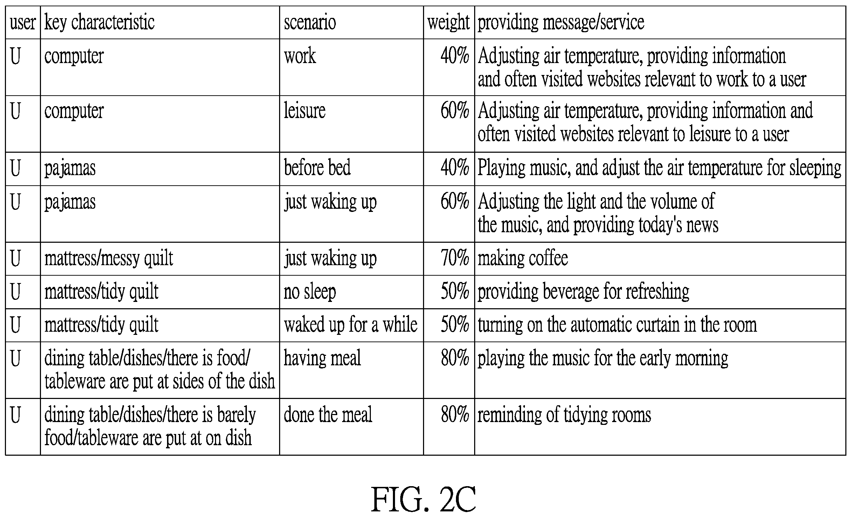

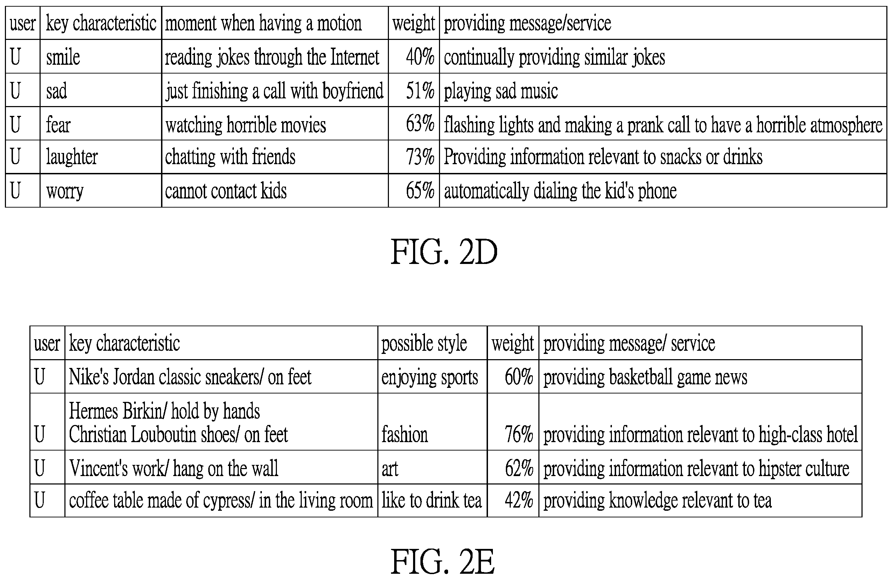

Referring to Figs. 1~2E, Fig. 1 shows a schematic diagram of an intelligence system of one embodiment of the instant disclosure, Fig. 2A shows a schematic diagram of a key characteristic-behavior chart of one embodiment of the instant disclosure, Fig. 2B shows a schematic diagram of a key characteristic-relative information chart of one embodiment of the instant disclosure, Fig. 2C shows a schematic diagram of a key characteristic-situation chart of one embodiment of the instant disclosure, Fig. 2D shows a schematic diagram of a key characteristic-emotion chart of one embodiment of the instant disclosure, and Fig. 2E shows a schematic diagram of a key characteristic-style chart of one embodiment of the instant disclosure.

In this embodiment, the intelligence system 1 is used and configured in a predetermined space A1. For example, the predetermined space A1 can be a living room, a kitchen, a bedroom, a study room, a conference room and the like. The intelligence system 1 comprises a database 11, an event recognition module 12, an event analysis module 13 and a service-information providing module 14.

The event recognition module 12 comprises an image capturing unit 121 and an image recognition unit 122. The image capturing unit 121 captures an image within the predetermined space A1, and transmits the image to the image recognition unit 122. The image recognition unit 122 recognizes a key characteristic in the image, and then captures part of the key characteristic as a key characteristic image. The image and the key characteristic image are both stored in the database 11.

In this embodiment, when there is difference among the images captured by the image capturing unit 121, an event is triggered. In other words, the articles, the movements of the articles in the relevant frames of images and the illuminance of the relevant frames of images are all recorded in an event.

In this embodiment, the database 11 can be a remote database or a local database. For example, the data stored in the database 11 can be information in any field, such as the financial information, political information, legal information, international trade information, or information relevant to movies, video games or images. In addition, the above information can be acquired for free or with charge.

The intelligence system 1 further comprises a communication module (not shown), and this communication module can be a wired communication module or a wireless communication module. The intelligence system 1 is connected to an external network or the database 11 through this communication module. For example, if the database is a local database, the intelligence system 1 can be connected to an external network or a remote database through this communication module.

The event analysis module 13 compares the key characteristic with a key characteristic-behavior chart, a key characteristic-relative information chart, a key characteristic-situation chart, a key characteristic-emotion chart or a key characteristic-style chart to generate a comparison result. In this embodiment, the service-information providing module 14 is a display screen, which is configured as a system unit of the intelligence system 1. The event recognition module 12 and the event analysis module 13 are configured as another system unit of the intelligence system 1. It is worth noting that the system unit comprising the service-information providing module 14 and the system unit comprising the event recognition module 12 and the event analysis module 13 have the same size. In this embodiment, the system unit comprising the service-information providing module 14 is 12"x12".

The key characteristic-behavior chart records different behavior modes corresponding to each key characteristic. For example, there are several possible behavior modes corresponding to the key characteristic that "a user U is sitting on the sofa" as follows. One behavior mode may refer to watching TV, another behavior mode may refer to surfing the Internet, still another one may refer to working, and the other behavior mode may refer to sitting idle. It should be noted that, different behavior modes recorded in the key characteristic-behavior chart are given various weights. The event analysis module 13 calculates and then obtains which behavior mode a user is likely to have by using algorithms relevant to the fields of machine learning and Deep Belief Network (DBN), such as Artificial Neural Network (ANN), Deep Neural Network (ANN), Convolutional Neural Network (CNN), Recurrent Neural Network (RNN) and the like. Thus, the key characteristic-behavior chart can always be updated and recorded. When the user's data is recorded by the intelligence system 1, the event analysis module 13 of the intelligence system 1 can generate a user preference chart (not shown) by collecting each key characteristic of the user, behavior modes and scenarios. This user preference chart is stored in the database 11 as an reference to predict the user behavior. In addition, the event analysis module 13 can periodically record and predict the user's health according to key characteristics, such as the user's expressions, body temperatures and figure. In this embodiment, different key characteristics may correspond to the same behavior mode. Thus, different weights may be given to the same behavior mode.

The key characteristic-relative information chart records different information corresponding to various key characteristics. For instance, when a user U takes his mobile phone and enters the predetermined space A1 and the image recognition unit 122 recognizes the game application used by the user as a key characteristic, the event analysis module 13 collects the information relevant to the game application though the external network or the database 11, and the service-information providing module 14 provides players' comments, the players' discussion forum or game tips to the user. Moreover, the event analysis module 13 collects the information relevant to the players' discussion forum, game tips, in-app purchases, and update weights recorded in the key characteristic-relative information chart according to the content required by the user.

The key characteristic-situation chart records scenarios corresponding to different key characteristics. As shown in Fig. 2C, if the computer is recognized as the key characteristic, the corresponding scenario may be a working scenario or a recreation scenario and the working scenario or the recreation scenario are given different weights. The intelligence system 1 provides the information relevant the working scenario or the recreation scenario to the user U according to the comparison result generated by the event analysis module 13. For example, if the event analysis module 13 determines that the scenario corresponding to the recognized key characteristic is the working scenario, the intelligence system 1 provides relevant profiles, websites or conference call software to the user according to the user's needs for work.

When the user enters the predetermined space A1, the image capturing unit 121 captures an image of the user and transmits this image to the image recognition unit 122. The image recognition unit 122 recognizes the image and obtains key characteristics of the image, such as the user's appearance, gender, hair style, outfit, body temperature, expression, personal belongings and even a position where the user is standing at. Different parts of the image which are corresponded to various key characteristics are taken as key characteristic images of different key characteristics, and are all stored in the database 11. The event analysis module 13 analyzes these key characteristics by comparing these key characteristics with the above described key characteristic-behavior chart, key characteristic-relative information chart or key characteristic-situation chart, and generates a comparison result. It should be noted that, in addition to the key characteristic-behavior chart, the key characteristic-relative information chart or the key characteristic-situation chart, the time information, geographical information, weather, air temperature, moisture, environmental events (such as natural disasters or man-made hazards) can also be considered by the event analysis module 13 to predict the user's needs. In other embodiments, the intelligence system 1 can work with other smart home appliances (not shown). For example, the intelligence system 1 can provide a control message to the smart home appliances, such as a smart LED lamp, a smart refrigerator, a smart air-conditioner and the like according to the comparison result.

The image capturing unit 121 can be a common camera module, an infrared camera module, a 3D camera module, an ultraviolet camera module and the like. In addition, the event recognition module 12 may have other sensors, such as micro phone, a ID acceleration sensor, a 3D acceleration sensor, a gyroscope, a G-sensor and the like to obtain each kind of sensing signal within the predetermined space A1 for further analysis.

The event analysis module 13 can recognize and analyze the key characteristic of the static articles within the predetermined space A1. Specifically speaking, the intelligence system 1, which is configured within the predetermined space A1, captures an image of the predetermined space A1, and recognizes the key characteristic of each static article within the predetermined space A1. For instance, the predetermined space A1 can be a living room. The event analysis module 13 of the intelligence system 1 recognizes the key characteristic of each static article within the predetermined space A1, such as the style or the color of the sofa, the coffee table, the carpet, the telephone and the like, and stores the recognized key characteristic as the predetermined data of the predetermined space A1. According to the room design of the predetermined space A1, the intelligence system 1 can recognize the key characteristics obtained within the predetermined space A1 to further analyze the user's preferences. Moreover, when the articles within the predetermined space A1 are moved to other places, taken away or there is an article brought into the predetermined space A1, the intelligence system 1 will provide relevant information to the user. For example, when the event analysis module 13 of the intelligence system 1 recognizes that one article has been moved to another place, the service-information providing module 14 provides relevant information to the user, such as the time when the article was moved to another place, the person who took the article to the other place, the original position of the article, the original spatial distribution, the current spatial distribution or the current article usage rate of the room. In addition, the intelligence system 1 can provide information relevant to the room design of the predetermined space A1, such as the styles of the room design, information relevant to the articles in the room, and the prices of the articles in the room.

In this embodiment, the intelligence system 1 can predict the user behavior according to the user's expressions (as shown in Fig. 2D) or the user's outfits (as shown in Fig. 2E), or can provide messages or services according to the user's personal style.

### [Another embodiment of the intelligence system]

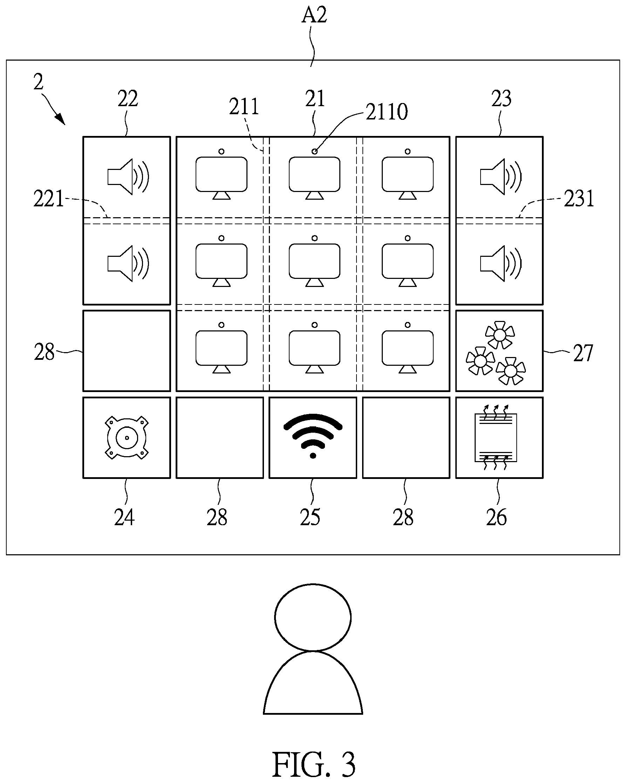

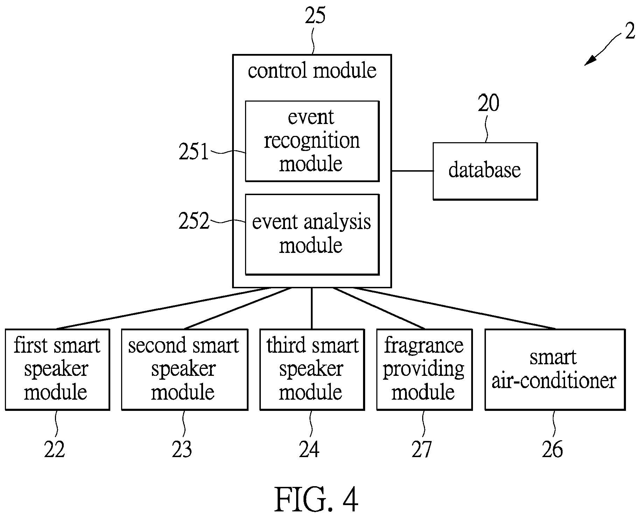

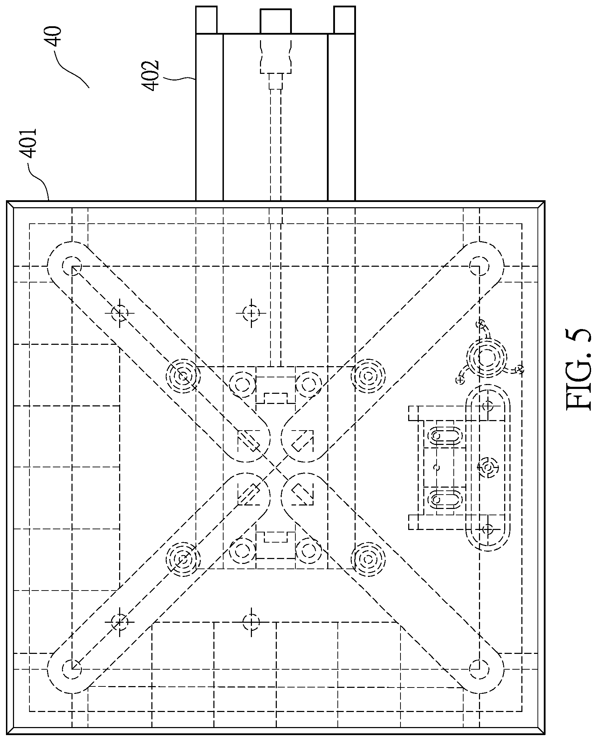

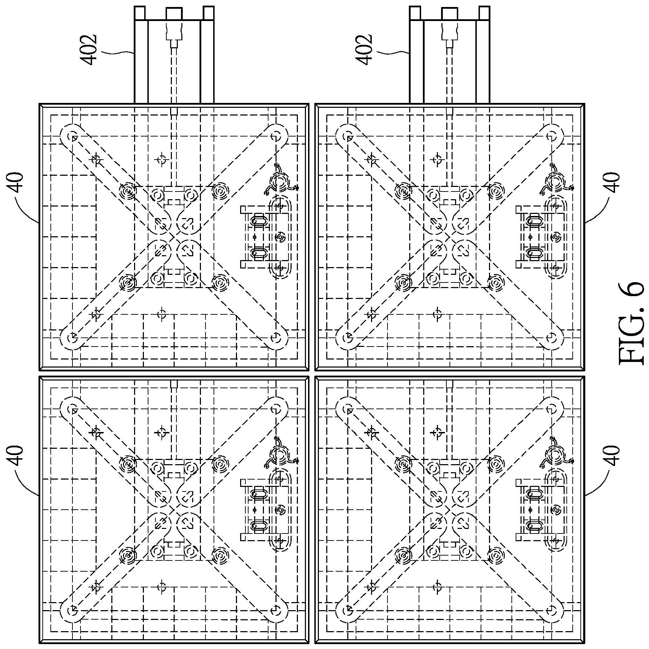

Referring to Figs. 3∼6, Fig. 3 is a schematic diagram showing that an intelligence system of one embodiment of the instant disclosure is configured and used in a predetermined space, Fig. 4 shows a schematic diagram of an intelligence system of another embodiment of the instant disclosure, Fig. 5 is a schematic diagram showing a system unit of the intelligence system shown in Fig. 3, and Fig. 6 is a schematic diagram showing that the system units shown in Fig. 3 forming a larger plane.

The intelligence system 2 shown in Fig. 3 has functions similar to the functions that the intelligence system 1 shown in Fig. 1 has. The intelligence system 2 comprises a database 20, a smart image module 21, a first smart speaker module 22, a second smart speaker module 23, a third smart speaker module 24, a control module 25, a smart air-conditioner 26, a fragrance providing module 27 and a plurality of general function modules 28.

In this embodiment, the smart image module 21, the first smart speaker module 22, the second smart speaker module 23, the third smart speaker module 24, the control module 25, the smart air-conditioner 26 and the fragrance providing module 27 can be all considered smart function modules.

The smart image module 21 comprises nine smart image units 211, and these nine smart image units 211 have the same size. The first smart speaker module 22 and the second smart speaker module 23 are respectively composed of two smart speaker units 221 and 231 which have the same size. The third smart speaker module 24, the control module 25, the smart air-conditioner 26, the fragrance providing module 27 and the general function modules 28 are all system units having the same size but different functions. The sizes of the third smart speaker module 24, the control module 25, the smart air-conditioner 26, the fragrance providing module 27, the general function modules 28, the smart image unit 211 and the smart speaker units 221 and 231 are all 12"x12". In this embodiment, the control module 25 is configured within the predetermined space A2. In other embodiments, the control module 25 can be configured at a remote server (not shown) to be connected to the data base 20. The control module 25 can be implemented by hardware, software, firmware or the combination of them to provide functions required by the user.

The general function module 28 can be used to accommodate things or can be used as decoration. In other words, the general function module 28 can have no electronic device. Thus, when designing the room, the user can also use the general function module 28 to fill a vacancy in the intelligence system 2.

The system units 211, 221 and 231, the third smart speaker module 24, the control module 25, the smart air-conditioner 26, the fragrance providing module 27 and the general function module 28 are shown in Fig. 5. The system unit 40 in Fig. 5 has a square plane structure 401 and an engaging structure 402, wherein the engaging structure 402 is configured behind the square plane structure 401. Two system units 40 can be engaged by their engaging structures 402. As shown in Fig. 6, the four system units 40 can be combined as a square plane.

The intelligence system 2 is configured on the wall within the predetermined space A2. There is a plurality of slide rails (not shown) configured behind the intelligence system 2. The smart image module 21, the first smart speaker module 22, the second smart speaker module 23, the third smart speaker module 24, the control module 25, the smart air-conditioner 26, the fragrance providing module 27 and the general function module 28 can be sequentially configured on the slide rails, such that these modules are all configured on a large plane. The intelligence system 2 can further comprise a smart lamp module (not shown). According to the user's need, the smart lamp module is configured on the wall or at the ceiling within the predetermined space A2. In addition, the intelligence system 2 further comprises a plurality of intelligent power modules (not shown). An intelligent power module is configured behind each system unit (including the smart image module 21, the first smart speaker module 22, the second smart speaker module 23, the third smart speaker module 24, the control module 25, the smart air-conditioner 26 and the fragrance providing module 27) to supply a driving power.

In this embodiment, each smart image unit 211 has a display screen. One smart image unit 211 can independently display images, or some smart image units 211 can be combined to have a larger display region to display data. In addition, each smart image unit 211 has an image capturing unit 2110, which can be controlled by the control module 25.

In this embodiment, the first smart speaker module 22 and the second smart speaker module 23 are respectively composed of two smart speaker units 221 and 231, and these two smart speaker units 221 and 231 have the same size and the same function. For example, the first smart speaker module 22 can be the speaker of the left channel and the second smart speaker module 12 can be the speaker of the right channel. The third smart speaker module 24 can be a heavy bass speaker. The first smart speaker module 22, the second smart speaker module 23 and the third smart speaker module 24 are controlled by the control module 25 to play music or audio messages.

The control module 25 can further comprise a communication module (not shown) to access data stored in database 20 through the wired network or the wireless network. The control module 25 has an event recognition module 251 and an event analysis module 252. The event recognition module 251 has kinds of sensors or image capturing units. In addition to the sensors or image capturing units of the event recognition module 251, the image capturing unit of the intelligence system can also be used, such as the image capturing unit 2110 of the smart image module 21. The sensors that the event recognition module 251 has can be a microphone, a ID acceleration sensor, a 3D acceleration sensor, a gyroscope, a G-sensor and the like. It is worth noting that, these sensors can be configured within the predetermined space A2 or outside the predetermined space A2.

The event recognition module 251 can capture at least one key characteristic relevant to the user using each kind of sensor. The event analysis module 252 analyzes the key characteristic relevant to the user to predict the user behavior. For example, the event analysis module 252 analyzes the key characteristic by comparing the user's key characteristic with the key characteristic-behavior chart, the key characteristic-relative information chart or the key characteristic-situation chart to generate a comparison result. The user behavior can be predicted according to this user behavior, which includes the behavior mode and the relevant information corresponding to the key characteristic.

The event analysis module 252 can calculate the possible behavior mode of the user and the relevant information corresponding to the key characteristic by using the machine learning and the Deep Belief Network (DBN), such as Artificial Neural Network (ANN), Deep Neural Network (ANN), Convolutional Neural Network (CNN), Recurrent Neural Network (RNN) and the like. In addition, the key characteristic-behavior chart, the key characteristic-relative information chart and the key characteristic-situation chart can be updated and recorded from time to time.

According to the comparison result, the control module 25 controls the smart image module 21 to display images of a television or a website and also to display the operating image of each kind of software. Also, the control module 25 can control the first smart speaker module 22, the second smart speaker module 23 and the third smart speaker module 24 to play audio data. In addition, the control module 25 can control the fragrance providing module 27 to spread fragrance, and can control the smart air-conditioner to adjust the air temperature, the moisture and the air quality within the predetermined space A2. Moreover, the control module 25 can control the smart lamp module (not shown) to adjust the light emitted into the predetermined space A2. Briefly, the control module 25 can provide all messages and information needed by a user and a user's preferred environment by recognizing the key characteristic relevant to the user.

### [Another embodiment of the intelligence system]

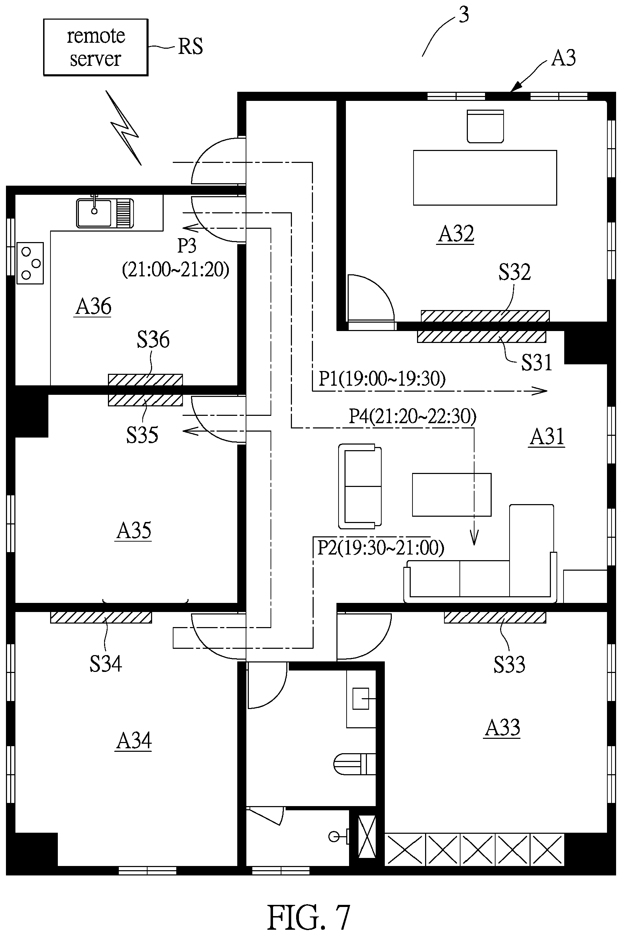

Referring to Fig. 7, Fig. 7 shows a schematic diagram of an intelligence system of still another embodiment of the instant disclosure. In this embodiment, the intelligence system 3 is configured within the predetermined space A3. The predetermined space 3 comprises a first intelligent sub-system S31, a second intelligent sub-system S32, a third intelligent sub-system S33, a fourth intelligent sub-system S34, a fifth intelligent sub-system S35 and a sixth intelligent sub-system S36. The first intelligent sub-system S31 is configured within a first region A31 of the predetermined space A3, the second intelligent sub-system S32 is configured within a second region A32 of the predetermined space A3, the third intelligent sub-system S33 is configured within a third region A33 of the predetermined space A3, the fourth intelligent sub-system S34 is configured within a fourth region A34 of the predetermined space A3, the fifth intelligent sub-system S35 is configured within a fifth region A35 of the predetermined space A3, and the sixth intelligent sub-system S36 is configured within a sixth region A36 of the predetermined space A3.

For example, the predetermined space A3 can be a home. The first region A31 is a living room, the second region A32 is a studying room, the third region A33 is a first bedroom, the fourth region A34 is a second bedroom, the fifth region A35 is a room for working out and the sixth region composed of a kitchen and a dining room. Fig. 7 is only for illustrating an example of the predetermined space A3, so the details in Fig. 7 are omitted.

The structures and the functions of the first intelligent sub-system S31, the second intelligent sub-system S32, the third intelligent sub-system S33, the fourth intelligent sub-system S34, the fifth intelligent sub-system S35 and the sixth intelligent sub-system S36 are similar to the structures and the functions of the intelligence system 2 in the last embodiment.

The intelligence system 3 further comprises a remote server RS to connect the first intelligent sub-system S31, the second intelligent sub-system S32, the third intelligent sub-system S33, the fourth intelligent sub-system S34, the fifth intelligent sub-system S35 and the sixth intelligent sub-system S36 together. The remote server RS plays a role of the control module 25 in the last embodiment, which can receive the images of regions captured by the first intelligent sub-system S31, the second intelligent sub-system S32, the third intelligent sub-system S33, the fourth intelligent sub-system S34, the fifth intelligent sub-system S35 and the sixth intelligent sub-system S36, to recognize the user's key characteristic and then to predict the user behavior.

In addition, the first intelligent sub-system S31, the second intelligent sub-system S32, the third intelligent sub-system S33, the fourth intelligent sub-system S34, the fifth intelligent sub-system S35 and the sixth intelligent sub-system S36 all have the image capturing unit (not shown in Fig. 7) as described in the last embodiment to capture images of different regions of the predetermined space A3. The first intelligent sub-system S31, the second intelligent sub-system S32, the third intelligent sub-system S33, the fourth intelligent sub-system S34, the fifth intelligent sub-system S35 and the sixth intelligent sub-system S36 are configured within different regions of the predetermined space A3, so according to the images captured within the same time interval but within different regions of the predetermined space A3, the position of the user can be obtained. Different intelligent sub-systems S31∼S36 can recognize the user's key characteristic within various regions of the predetermined space A3 to further predict and record the user's behavior modes in different regions.

For example, when the moving path of a user is a first path P1 shown in Fig. 7, the intelligence system 3 can determine that the user enters the first region A31 of the predetermined space within the time interval from 19:00 to 19:20 according to the first intelligent sub-system S31. According to the second moving trace P2 of the user within the time interval from 19:30 to 21:00 obtained by the first intelligent sub-system S31, the fourth intelligent sub-system S34 and the fifth intelligent sub-system S35, the intelligence system 3 can determine that the second moving trace P2 of the user within the time interval from 19:30 to 21:00 is from the first region A31 (the living room), to the fourth region A34 (second bedroom) and then to the fifth region A35 (the room for working out). According to the third moving trace P3 of the user within the time interval from 21:00 to 21:20 obtained by the fifth intelligent sub-system S35 and the sixth intelligent sub-system S36, the intelligence system 3 can determine that the third moving trace P3 of the user within the time interval from 21:00 to 21:20 is from the fifth region A35 (the room for working out) to the sixth region A36 (the kitchen). According to the fourth moving trace P4 of the user within the time interval from 21:20 to 22:30 obtained by the sixth intelligent sub-system S36 and the first intelligent sub-system S31, the intelligence system 3 can determine that the fourth moving trace P4 of the user within the time interval from 21:20 to 22:30 is from the sixth region A36 (the kitchen) to the first region A31 (the living room). In other words, the intelligence system 3 can determine the behavior modes of different users within different regions and different time intervals, so as to further provide different information to different users in various regions, such as the information relevant to TV programs, movies, financial news, sports news and the like.

Briefly, the intelligence system 3 can obtain the position of the user and also can predict the user's movement. Additionally, by combining the intelligent sub-systems S31∼S36 configured within different regions A31∼A36, the intelligence system 3 can predict the user's behavior. The intelligence system 3 can not only predict the position of the user, but can also predict the moving path of the user over time.

### [One embodiment of the method for providing a message and/or service adapted to an intelligence system]

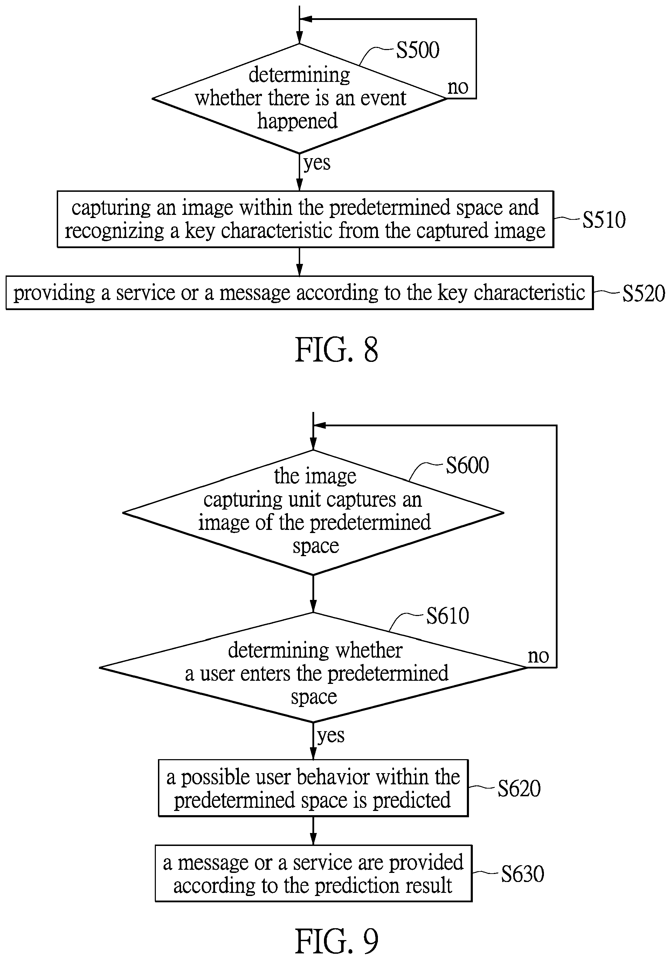

Referring to Fig. 8, Fig. 8 shows a flow chart of a method for providing a message and/or service adapted to an intelligence system of one embodiment of the instant disclosure. It should be noted that, the method for providing a message and/or service provided in this embodiment can be adapted to the intelligence system 2 described in the above embodiment, so the following illustration is based on the structure of the intelligence system 2.

The method for providing a message and/or service provided in this embodiment at least comprises the following steps. Step S500 is to determine whether an event has happened, if no, step S500 is repeatedly executed, but if yes, it goes to step S510. Step S510 is to capture an image within the predetermined space and to recognize a key characteristic from the captured image. After that, it goes to step S520, and step S520 is to provide a service or a message according to the key characteristic.

In step S500, the image capturing unit 2110 of the intelligence system 2 continually detects whether an event has happened within the predetermined space. When there is a difference among the images captured by the image capturing unit 121, an event is triggered. In other words, the articles, the movements of the articles in the relevant frames of the images and the illuminance of the relevant frames of the images are all recorded in an event. The event recognition module 251 of the intelligence system 2 can recognize at least one key characteristic from the image captured by the image capturing unit 2110. In addition, the intelligence system 2 can recognize and analyze the key characteristic for different events triggered by static articles or people. The image captured by the image capturing unit 2110 is transmitted to the control module 25.

In step S510, the control module 25 of the intelligence system 2 controls the event recognition module 251 to recognize the key characteristic for the event recorded in step S500. Also, the control module 25 controls the image recognition unit to capture part of the key characteristic as a key characteristic image, and the image and the key characteristic image are stored in a database 20.

In step S520, the event analysis module 252 compares the key characteristic with the key characteristic-behavior chart, the key characteristic-relative information chart or the key characteristic-situation chart and generates a prediction result to analyze and predict the user behavior. In addition, according to the prediction result, the control module 25 controls the smart image module 21, the first smart speaker module 22, the second smart speaker module 23, the third smart speaker module 24, the smart air-conditioner module 26 or the fragrance providing module 27 to provide the message, data or environment that a user may need.

### [Another embodiment of the method for providing a message and/or service adapted to an intelligence system]

Referring to Fig. 9, Fig. 9 shows another flow chart of a method for providing a message and/or service adapted to an intelligence system of one embodiment of the instant disclosure. It should be noted that, the method for providing a message and/or service provided in this embodiment can be adapted to the intelligence system 2 described in the above embodiment, so the following illustration is based on the structure of the intelligence system 2.

The method for providing a message and/or service provided in this embodiment at least comprises the following steps. In step S600, the image capturing unit captures an image of the predetermined space A2. In step S610, it is determined whether a user enters the predetermined space A2. If yes, it goes to step S620, but if not, it returns to step S600. In step S620, the possible user behavior within the predetermined space is predicted. In step S630, a message or a service are provided according to the prediction result.

In step 600, the image capturing unit 2110 of the intelligence system 2 captures an image of the predetermined space A2. In step S610, the image captured by the image capturing unit 2110 is used to determine whether there is a person entering the predetermined space A2. When there is a person entering the predetermined space A2, the key characteristic relevant to this person will be recognized and analyzed. Specifically, the image captured by the image capturing unit 2110 is transmitted to the control module 25 for recognition and analysis.

Is step S620, the control module 25 of the intelligence system 2 recognizes and analyzes the key characteristic relevant to the user of an authenticated mobile device or the person who enters the predetermined space A2. Specifically speaking, the event recognition module 25 recognizes and predicts the user behavior according to the key characteristic-behavior chart, the key characteristic-relative information chart or the key characteristic-situation chart. In this embodiment, the user behavior is predicted by using the machine learning and Deep Belief Network (DBN), such as Artificial Neural Network (ANN), Deep Neural Network (ANN), Convolutional Neural Network (CNN), Recurrent Neural Network (RNN) and the like.

In step S630, the event analysis module 252 of the control module 25 compares the key characteristic recognized in step S510 and a key characteristic-behavior chart, a key characteristic-relative information chart or a key characteristic-situation chart to generate a prediction result. After that, the control module 25 controls the smart image module 21, the first smart speaker module 22, the second smart speaker module 23, the third smart speaker module 24, the smart air-conditioner module 26 or the fragrance providing module 27 to provide the message, data or environment that a user may need.

To sum up, the intelligence system provided by the instant disclosure is composed of a plurality of system units, which can reduce the cost and the complexity of assembly. In addition, the appearance of the intelligence system provided by the instant disclosure is a large plane, and thus it can easily fit a room and provide a diversity of room designs for a user. Moreover, the intelligence system provided by the instant disclosure can recognize a key characteristic of the user to predict the user behavior, and thus can providing a useful message and a cozy environment for the user.

The descriptions illustrated *supra* set forth simply the preferred embodiments of the instant disclosure; however, the characteristics of the instant disclosure are by no means restricted thereto. All changes, alterations, or modifications conveniently considered by those skilled in the art are deemed to be encompassed within the scope of the instant disclosure delineated by the following claims.

## Claims

1. An intelligence system (1), configured and used in a predetermined space (A1), comprising:
an event recognition module (12), comprising:
an image capturing unit (121), capturing an image within the predetermined space (A1); and
an image recognition unit (122), recognizing a key characteristic of the image;
an event analysis module (13), comparing the key characteristic with a key characteristic-behavior chart, a key characteristic-relative information chart, a key characteristic-situation chart, a key characteristic-emotion chart or a key characteristic-style chart, and generating a comparison result; and
a service-information providing module (14), providing at least a message or a service according to the comparison result.

2. The intelligence system (1) according to claim 1, wherein the image recognition unit captures part of the key characteristic as a key characteristic image, the image, the key characteristic image and the comparison result are stored in a database (11), and the key characteristic-behavior chart, the key characteristic-relative information chart and the key characteristic-situation chart are updated according to the comparison result.

3. The intelligence system (1) according to claim 1, wherein the image captured within the predetermined space (A1) is the image of all of the predetermined space (A1).

4. The intelligence system (1) according to claim 3, wherein the intelligence system (1) is configured on a wall in the predetermined space (A1).

5. The intelligence system (1) according to claim 1, wherein the service-information providing module (14) is independently configured as a system unit, and the event recognition module (12) and the event analysis module (13) are configured as another system unit.

6. The intelligence system (1) according to claim 5, wherein the system unit comprising the service-information providing module (14) and the system unit comprising the event recognition module (12) and the event analysis module (13) have the same size.

7. An intelligence system (2), configured and used in a predetermined space (A2), comprising:
a control module (25), comprising:
a smart image module (21), comprising a plurality of smart image units (211) to show images; and
a smart speaker module (24), comprising a plurality of smart speaker units (221, 231) to transmit an audio signal;
wherein the smart image module (21) is panel-shaped.

8. The intelligence system (2) according to claim 7, wherein the smart image units (211) and the smart speaker units (221, 231) have the same size.

9. The intelligence system (2) according to claim 7, wherein the smart image module (21) and the smart speaker module (24) are configured in the same plane.

10. The intelligence system (2) according to claim 7, wherein the control module (25) is configured within the predetermined space (A2) or at a remote server (RS).

11. The intelligence system (2) according to claim 7, wherein the smart image module (21) and the smart speaker module (24) respectively have an intelligent power module.

12. The intelligence system (2) according to claim 7, further comprising a general function module (28), wherein the control module (25), the smart image module (21), the smart speaker module (24) and the general function module (28) are configured in the same plane.

13. A method for providing a message and/or service adapted to an intelligence system (1), wherein the intelligence system (1) is configured and used in a predetermined space (A1), the method comprising:
capturing an image within the predetermined space by an image capturing unit (12);
determining whether a user enters the predetermined space (A1);
predicting a user behavior happening in the predetermined space (A1); and
predicting a message or a service according to a prediction result.

14. The method according to claim 13, wherein the step of predicting the user behavior happening in the predetermined space (A1) further comprises:
predicting the user behavior according to a key characteristic-behavior chart, a key characteristic-relative information chart, a key characteristic-situation chart, a key characteristic-emotion chart or a key characteristic-style chart, and generating the prediction result.

15. The method according to claim 14, wherein the intelligence system (1) further comprises a smart image module (21) and a smart speaker module (24), wherein the intelligence system (1) provides the message by the smart image module (21) or the smart speaker module (24) according to the prediction result.

16. A method for providing a message and/or service adapted to an intelligence system (2), wherein the intelligence system (2) is configured and used in a predetermined space (A2), the method comprising:
determining whether an event is triggered;
capturing an image within the predetermined space (A2), and recognizing a key characteristic of the image; and
providing a message or a service according to the key characteristic.

17. The method according to claim 16, wherein the intelligence system (2) further comprises an event recognition module (12) configured for recognizing whether the event is triggered.

18. The method according to claim 17, wherein the intelligence system (2) further comprises an event analysis module (13) configured for analyzing the key characteristic to generate a prediction result.

19. The method according to claim 18, wherein the intelligence system (2) further comprises a smart image module (21), and the intelligence system (2) provides the message or the service by the smart image module (21) according to the prediction result.
